(19) Europäisches Patentamt
European Patent Office
Office européen des brevets

(11) **EP 4 726 648 A1**

(12) **EUROPEAN PATENT APPLICATION**
published in accordance with Art. 153(4) EPC

(43) Date of publication:
**15.04.2026   Bulletin 2026/16**

(21) Application number: **24819094.4**

(22) Date of filing: **14.05.2024**

(51) International Patent Classification (IPC):
***G06T 7/00*** (2017.01)

(52) Cooperative Patent Classification (CPC):
**G06T 7/00**

(86) International application number:
**PCT/JP2024/017720**

(87) International publication number:
**WO 2024/252857 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.06.2023   JP 2023094360**

(71) Applicant: **NIKON CORPORATION**
**Tokyo 140-8601 (JP)**

(72) Inventors:
• **OTSUBO Yosuke**
**Tokyo 140-8601 (JP)**
• **TAKAYAMA Yuuya**
**Tokyo 140-8601 (JP)**
• **KADOI Kohei**
**Tokyo 140-8601 (JP)**
• **TAKEI Shunsuke**
**Tokyo 140-8601 (JP)**
• **HATAGUCHI Takeshi**
**Tokyo 140-8601 (JP)**

(74) Representative: **Hoffmann Eitle**
**Patent- und Rechtsanwälte PartmbB
Arabellastraße 30
81925 München (DE)**

(54)   **TRAINING DEVICE AND PROGRAM**

(57)     A learning apparatus includes: a storage unit which stores a learning model that is trained by setting, as an input, a training image set and a training feature value set that is related to a subject of the training image set and that is obtained by quantifying a predetermined interpretable feature, and by setting, as an output, results of a determination on the training image set and the training feature value set; a determination unit which outputs, by using the learning model stored in the storage unit, results of a determination on an target image and a first feature value that is related to a subject of the target image and that is obtained by quantifying the predetermined interpretable feature; and an explanation output unit which outputs a degree of contribution of the target image and a degree of contribution of the first feature value, for the result of the determination on the target image and the first feature value by the learning model.

FIG.1

**Description**

1. TECHNICAL FIELD

The present invention relates to a learning apparatus and a program.

2. RELATED ART

Patent Document 1 discloses that "a basis calculation unit 114 can calculate an image that visualizes a basis for a determination for each of a diagnose and a discriminative diagnose, in which a trained machine learning model is used in an inference unit 112, for example, by using an algorithm such as Grad-CAM (Gradient-weighted Class Activation Mapping), LIME (LOCAL Interpretable model-agnostic Explanations), SHAP (SHapley Additive exPlanations) that is an advanced version of LIME, and TCAV (Testing with Concept Activation Vectors)".

Non-Patent Document 1 discloses a learning model that classifies skin lesions by inputting a skin image and metadata (such as an age and gender of a patient).

RELATED ART DOCUMENTS

Patent Document

Patent Document 1: International Publication No. WO 2022/176396
Non-patent Document 1: Nils Gessert et al. "Skin lesion classification using ensembles of multi-resolution EfficientNets with meta data" Methods X, Volume 7, 2020

GENERAL DISCLOSURE

In a first aspect of the present invention, a learning apparatus includes: a storage unit which stores a learning model that is trained by setting, as an input, a training image set and a training feature value set that is related to a subject of the training image set and that is obtained by quantifying a predetermined interpretable feature, and by setting, as an output, results of a determination on the training image set and the training feature value set; a determination unit which outputs, by using the learning model stored in the storage unit, results of a determination on an target image and a first feature value that is related to a subject of the target image and that is obtained by quantifying the predetermined interpretable feature; and an explanation output unit which outputs a degree of contribution of the target image and a degree of contribution of the first feature value, for the result of the determination on the target image and the first feature value by the learning model.

The predetermined interpretable feature may include a parameter for quantitatively representing a shape or a characteristic of the subject. The determination unit may extract a second feature value from the target image, by using the learning model, and the explanation output unit may calculate each degree of contribution, by performing linear regression on a neighborhood of data consisting of the first feature value and the second feature value relating to the target, in a feature space including the second feature value and the first feature value. The determination unit may extract a second feature value from the target image, by using the learning model, and the explanation output unit may compress a dimension of a feature value vector that is the second feature value, and calculate a degree of contribution of the second feature value as the degree of contribution of the target image. The explanation output unit may compress the feature value vector into one dimension.

The learning apparatus may further include a feature calculation unit which calculates at least one of first feature values, each of which is the first feature value, for inputting to the learning model, based on the target image.

The learning model may include a convolutional neural network.

The explanation output unit may further output an image showing a basis for the determination in the target image, for the result of the determination by the learning model. The explanation output unit may cause the degree of contribution of the target image and the degree of contribution of the first feature value, to be aligned and displayed. The explanation output unit may cause the degree of contribution of the target image, the degree of contribution of the first feature value, the image showing the basis for the determination, and the result of the determination, to be aligned and displayed. The explanation output unit may cause text which corresponds to each of the degree of contribution of the target image and the degree of contribution of the first feature value, to be displayed.

In a second aspect of the present invention, a program causes a computer to implement: a storing function of storing, in a storage unit, a learning model that is trained by setting, as an input, a training image set and a training feature value set that is related to a subject of the training image set and that is obtained by quantifying a predetermined interpretable feature, and by setting, as an output, results of a determination on the training image set and the training feature value set; a determining function of outputting, by using the learning model stored in the storage unit, results of a determination on an target image and a first feature value that is related to a subject of the target image and that is obtained by quantifying the predetermined interpretable feature; and an explanation outputting function of outputting a degree of contribution of the target image and a degree of contribution of the first feature value, for the result of the determination on the target image and the first feature value by the learning model.

In a third aspect of the present invention, a learning apparatus uses a learning model that is trained by setting, as an input, a training image set and a training feature value set that is related to a subject of the training image set and that is obtained by quantifying a predetermined interpretable feature, and by setting, as an output, results of a determination on the training image set and the training feature value set, and the learning apparatus outputs results of a determination on an target image and a first feature value that is related to a subject of the target image and that is obtained by quantifying the predetermined interpretable feature, and the learning apparatus includes: an explanation output unit which outputs a degree of contribution of the target image and a degree of contribution of the first feature value, for the result of the determination on the target image and the first feature value by the learning model.

The summary clause does not necessarily describe all necessary features of the embodiments of the present invention. The present invention may also be a sub-combination of the features described above.

BRIEF DESCRIPTION OF THE DRAWINGS

Fig. 1 shows a functional block of a learning apparatus 10 according to the present embodiment.
Fig. 2 shows an operational flow of the learning apparatus 10.
Fig. 3 schematically shows an example of a learning model 120.
Fig. 4 is a distribution plot for describing an outline of a method of linear regression in a feature space.
Fig. 5 is a distribution plot describing a readable feature space.
Fig. 6 is a distribution plot describing a method of compressing a dimension of a second feature value into one dimension.
Fig. 7 shows an example of a display image 200 on a display by an explanation output unit 104.
Fig. 8 is a template 230 of text that is displayed in a text area 220.
Fig. 9 is a table showing another application example.
Fig. 10 shows an example of a computer 2200 in which a plurality of aspects of the present invention may be embodied in whole or in part.

DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

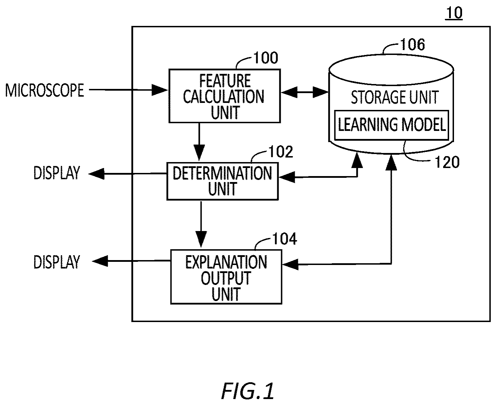

Fig. 1 shows a functional block of a learning apparatus 10 according to the present embodiment. The learning apparatus 10 outputs some kind of results of a determination on an input as a target. The determination may be deciding which of predetermined categories the input belongs to, or may be calculating a possibility that the input belongs to each category, as a predicted probability. In the present embodiment, the input as a target is each of an image of a cell, and a feature value (first feature value) that is related to a cell captured in the image and that is obtained by quantifying a predetermined interpretable feature; and the determination as the output is each predicted probability obtained by predicting which of four states of a cell cycle the cell captured in the image and the first feature value are in. The output may also be referred to as a decision, determination, prediction, inference, estimation, or the like.

For such a determination, a learning model such as deep learning is used. In the learning model, accuracy of the determination and ease of understanding a basis for the determination are often in a trade-off relationship. For example, deep learning is a learning model which provides a comparatively accurate determination; however, it is difficult for a user to interpret a node and a weight thereof in each layer even when the user looks at them. Therefore, tools for explaining the basis for the determination, such as Grad-CAM, LIME, SHAP, and TCAV, are proposed; however, none of them can be said to be sufficient. In the present embodiment, a purpose is to ensure the accuracy of the determination, and to present the basis for the determination in an easily understandable manner. It should be noted that the ease of understanding the basis may be referred to as a level of explainability.

The learning apparatus 10 includes a feature calculation unit 100, a determination unit 102, an explanation output unit 104, and a storage unit 106. The storage unit 106 stores a learning model 120. The learning apparatus 10 may be information equipment such as a personal computer, a tablet, or a smartphone, and may be implemented by a program or an application being installed on such information equipment. In addition, the learning apparatus 10 may also be a web server that outputs some kind of result of the determination on the input as a target, by using cloud computing, and may be implemented by a program or application being installed thereon. It should be noted that the web server is connected to a microscope or the like via a network.

The feature calculation unit 100 acquires an input image from an external device such as a microscope. The feature calculation unit 100 may read an input image stored in advance in the storage unit 160. The feature calculation unit 100 calculates the feature value (first feature value) obtained by quantifying the predetermined interpretable feature, from the input image, and inputs the calculated feature value to the learning model 120.

The determination unit 102 performs, on the input image, a determination using the learning model 120 stored in the storage unit 106. The determination unit 102 outputs a result of the determination to an external device such as a display.

When the learning model 120 obtains the result of the determination, the explanation output unit 104 outputs, in a comparable manner: a degree of contribution of the input image (feature value (second feature value described below) extracted from a pixel value of the input image); and a degree of contribution of the feature value (first feature value) that is related to a subject of the input image and that is obtained by quantifying the predetermined interpretable feature. An output destination is, for example, similarly to the determination unit 102, a display.

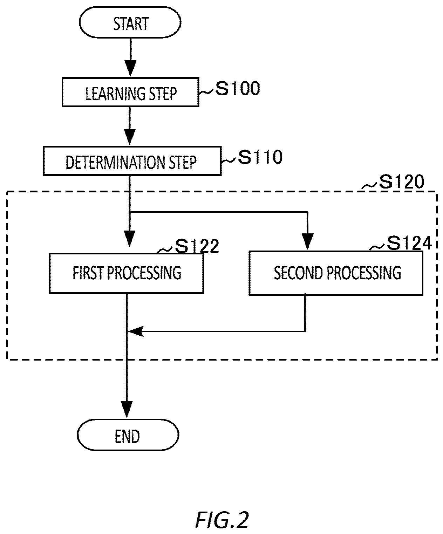

Fig. 2 shows an operational flow of the learning apparatus 10. The operational flow is started, for example, by the user starting up the learning apparatus 10. The operational flow has: a learning step S100 of training the learning model 120; a determination step S110 of determining a target by using the learning model 120; and an explanation step S120 of calculating the degree of contribution or the like to explain the result of the determination.

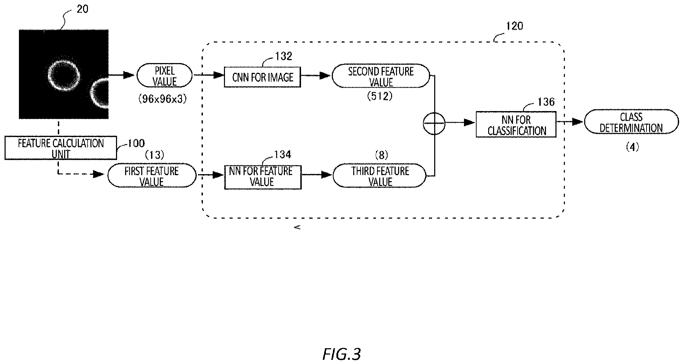

Fig. 3 schematically shows an example of the learning model 120. In the learning step of step S100, the learning model 120 is first set. In the present embodiment, the learning model 120 is set as a model that uses, in a combination manner, machine learning that uses an input image 20 itself, in other words, a pixel value, and machine learning that uses the feature value that is related to the subject of the input image 20 and that is obtained by quantifying the predetermined interpretable feature. The model may be referred to as a multimodal model from a viewpoint of using different types of inputs.

The learning model 120 includes a CNN for image 132 as a machine learning using the pixel value. The CNN for image 132 is a CNN (convolutional neural network) that sets an image as the input. There is no limitation to the number of layers of the CNN, or the number of nodes (also referred to as filters, kernels, or the like) in each layer; however, the present embodiment uses a model up to a fully connected layer in VGG16 (that is, a VGGNet16 layer). The CNN for image 132 repeatedly performs convolution and pooling on the input image 20 which has, for example, pixel values (96 height $\times$ 96 width $\times$ 3 color channels), and calculates 512 nodes and weights for the respective nodes. The weights for 512 nodes are used as a 512-dimensional second feature value in subsequent steps.

The learning model 120 includes a NN for feature value 134 as machine learning that uses the quantified feature value. The NN for feature value 134 is a neural network of a single layer or multiple layers, and there is no limitation to the number of layers or the number of nodes in each layer. In the present embodiment, the NN for feature value 134 receives the input of the first feature value including 13 feature values, and calculates eight nodes and the weight for each node. The weights for the eight nodes are used as an eight-dimensional third feature value in subsequent steps.

The first feature value is calculated from the input image 20 by the feature calculation unit 100. As an example of the feature calculation unit 100, OpenCV is used; however, another image processing engine may also be used. It should be noted that instead of using the feature calculation unit 100, the user may specify the first feature value, and input it directly to the NN for feature value 134.

The first feature value is related to the subject of the input image 20, and is obtained by quantifying the predetermined interpretable feature. The predetermined interpretable feature is a feature that is quantitatively and intuitively understandable by the user. In the present embodiment, the predetermined interpretable feature includes a feature related to a shape of the cell, corresponding to determining the cycle of the cell captured in the input image 20. Examples of the feature are 13 features: a cell area, a convex hull, perimeter, maximum fillet diameter, minimum fillet diameter, diameter, bounding rectangle height, bounding rectangle width, circularity, convexity, elongation, coarseness, and irregularity. The first feature value may be another feature (for example, a density of the cell), and the number is not limited.

The learning model 120 further includes a NN for classification 136. The NN for classification 136 is a fully connected layer of a final layer of the CNN for image 132 and a final layer of the NN for feature value 134, and performs four class determinations. In other words, the NN for classification 136 can be said to be a classifier that determines four classes from a 520-dimensional input in which the 512-dimensional second feature value and the eight-dimensional third feature value are combined. The four classes that are determined are "G1: DNA synthesis preparation" (class 1), "S: DNA synthesis and replication" (class 2), "G2: two sets of chromosomes" (class 3), and "M: cell division" (class 4), which correspond to each phase of the cell cycle.

The learning model 120 before learning is initially set, for example, based on the input from the user. In this case, the learning apparatus 10 may: store an outline of the model in the storage unit 108; receive, from the user, the inputs of the number of layers and the number of nodes in the network; and initially set the learning model 120 based on the inputs.

In the learning step of step S100, for example, 100,000 sets of the input image 20 as a training image set (also referred as a teacher image set), a training first feature value set, and a correct answer class are prepared. The learning model 120 is trained by reducing an error between the result of the determination and a correct answer when these training image set and the training first feature value set are input. For example, as a method of reducing the error, backpropagation is used. Another learning method may be used, and further, a learning method such as dropout may be used in combination.

As described above, the pixel value of the training input image 20 and the training first feature value are set as the input, and a result of a predetermined determination (cycle) on the subject (cell) of the input image 20 is set as the output, and the learning model 120 is trained. The trained learning model 120 is stored in the storage unit 106. As described above, the operation of step S100 is completed. It should be noted that as the learning progresses, contents of 512 nodes of the second feature value change; however, even when the nodes after the learning are visually displayed, the user does not intuitively understand what they represent.

Next, in the determination step of step S110, the determination unit 102 reads the trained learning model 120 from the storage unit 106; inputs, to the learning model 120, the input image 20 as a target, and the feature value (first feature value) that is related to the subject (cell) of the input image 20 as a target and that is obtained by quantifying the predetermined interpretable feature; and performs a predetermined determination (cell cycle) of the subject. As the result of the determination, for each of the four classes, the determination unit 102 outputs a predicted probability indicating a possibility of belonging to each class.

It should be noted that by simply outputting the result of the determination, there is a possibility that the user cannot understand why the result of the determination is reached, and the result of the determination is not utilized.

Next, in the explanation step of step S120, two instances of processing are performed in parallel. First processing (step S122) is, when the learning model 120 obtains the result of the determination, processing of calculating: a degree of contribution made by a contribution of the image itself; and a degree of contribution made by a contribution of the feature value (first feature values) that is related to the subject of the input image and that is obtained by quantifying the predetermined interpretable feature. Second processing (step S124) is processing of visualizing (visualizing the basis for the determination) a region contributing to the determination result in the image. The first processing and the second processing are performed by the explanation output unit 104. First, the first processing will be described. In the present embodiment, the first processing is processing based on LIME (LOCAL Interpretable model-agnostic Explanations) that is a well-known method; and uses a method of estimating an explanation model in a neighborhood of target data in a feature space.

The target data is constituted by the feature value (second feature value) of the input image 20 as a target; and the feature value (first feature value) that is related to the subject (cell) of the input image 20 as a target and that is obtained by quantifying the predetermined interpretable feature.

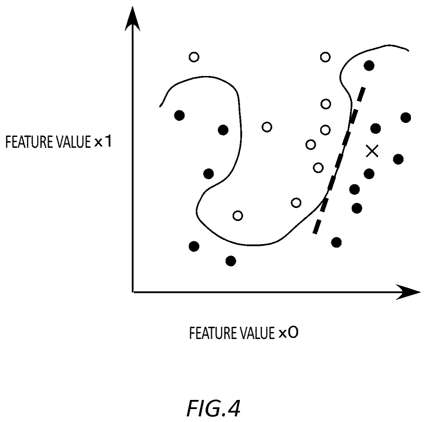

Fig. 4 is a distribution plot for describing an outline of a method of linear regression in a feature space. In the example of Fig. 4, a two-dimensional feature space is depicted with a feature value $x_0$ and a feature value $x_1$ as spatial axes. In the same figure, the feature value of the target is indicated by a cross mark; another input image that has the highest predicted probability of belonging to the same class as that of the target data, is indicated by a black circle; and another input image that has the highest predicted probability of belonging to any class different from that of the target, is indicated by a white circle. In the same figure, a solid line is a decision surface (boundary surface), which is learned by the learning model 120, for determining whether the input belongs to the same class as, or a different class from that of the target.

As shown by the solid line, the decision surface of the learning model 120 is complex. However, by focusing on the "neighborhood of the target data" and performing the linear regression (linear approximation) on the decision surface, a slope of the line may be considered to correspond to the weights of the feature value $x_0$ and the feature value $x_1$ in that neighborhood. In other words, by focusing on the neighborhood of the target data, and approximating the learning model there by a linear classifier, the weight of each feature value may be regarded as the degree of contribution of each feature value, in the learning model 120, for the determination result.

Therefore, training data is extracted, and the predicted probability is calculated again by the trained learning model 120. The training data is constituted by the feature value of the training input image 20; and the feature value (training first feature value) that is related to the subject of the training input image and that is obtained by quantifying the predetermined interpretable feature.

Here, in order to define the "neighborhood of the target data", the feature space shown in Fig. 4 is converted into a "readable feature space".

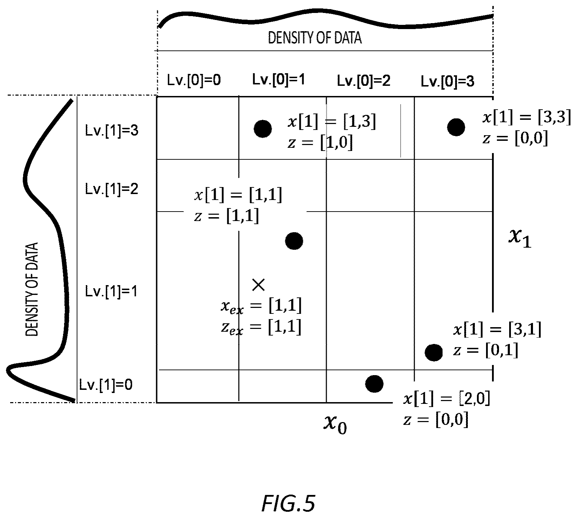

The "readable feature space" is defined as follows. (1) Each feature value is divided into independent regions (one region corresponds to one cell in Fig. 5) according to densities of the target data and the training data (collectively referred to as data). (2) For a certain feature value, as a readable feature value, 1 is assigned to the training data that belongs to the same level as that of the target data; and 0 is assigned to the training data that does not belong to it. In other words, the feature value of each piece of data is projected into a binary space. This assignment is performed for each piece of data and each feature value, and a cost function for linear regression is set based on this.

Regarding the definition (1) of the readable feature space described above, the division into regions is performed such that each region contains a predetermined number of pieces of data, or a number of pieces of data in a predetermined range. In this manner, as shown in Fig. 5, for each feature value, a width of a region of a location where the density of data is high, that is, a numerical value range, becomes narrow. Conversely, the width of a region of a location where the density of data is low becomes wide.

Regarding the above definition (2) of the readable feature space, the division into regions is used to assign a readable feature value $z_i$ to each piece of data. For a feature value $x_i$ of certain data, when it is in the same region as that of the target data, the readable feature value $z_i = 1$ is assigned. Conversely, for the feature value $x_i$, when it is not in the same region as that of the target data, the readable feature value $z_i = 0$ is assigned. For each feature value of the data, the readable feature value is assigned according to the above description. In this manner, a space is defined such that a component of z is assigned 1 when it is close to the target data, and is assigned 0 when it is distant.

Fig. 5 is a distribution plot describing a readable feature space. In the example of Fig. 5, a two-dimensional readable feature space is depicted with a feature value $x_0$ and a feature value $x_1$ as spatial axes. In the figure, the target data is indicated by a cross mark, and the extracted training data is represented by a black circle. Further, the number of pieces of data for each feature value, that is, a density of data, is schematically indicated by a curve.

Next, the linear regression is performed in the readable feature space. First, for the i-th data, Expression is made as follows.

[Math 1]

$$y_i = \boldsymbol{w}^T \boldsymbol{z}_i + b$$

Here, $y_i$ is the predicted probability in which the data is predicted to be in the same class as that of the target data; w is a vector having a dimension of the feature value; and b is a constant term.

For each of the target data and the training data, $y_i$ and $z_i$ are calculated, and under the above Expression, w and b are estimated to minimize a squared error between a left side and a right side of Math 1 described above, as follows.

[Math 2]

$$w, b = \arg\min_{w,b} \sum_{i=1}^{N} (y_i - \boldsymbol{w}^T \boldsymbol{z}_i + b)$$

An i-th component $w_i$ of the coefficient w obtained by the estimation corresponds to the degree of contribution of the feature value $x_i$, which is calculated by the linear regression in the readable feature space, to the predicted probability. Further, it can be said that a magnitude relationship between coefficients $w_i$ reflects a magnitude relationship between degrees of contribution of the feature values $x_i$ in the learning model 120.

It should be noted that a case where the coefficient $w_i$ is a positive value contributes to the predicted probability in an increasing direction, and a case of being negative contributes in a decreasing direction. The constant b is a model bias, and corresponds to the predicted probability when random data is input.

The descriptions of the readable feature space shown in Fig. 5 mentioned above, and the linear regression in the space are typical descriptions of the well-known LIME. In the present embodiment, different types of features that are the image and the first feature value (that is, the feature value obtained by quantifying the predetermined interpretable feature), are input to LIME; and the following processing is performed to calculate the degree of contribution of each feature value. (1) The first feature value is converted into a readable feature value. (2) The dimension of the feature value (second feature value) of the image is reduced and is converted into the readable feature value.

The above conversion (1) is performed as the conversion into the readable feature space shown in Fig. 5 mentioned above.

On the other hand, for the above conversion (2), the second feature value that is extracted from the neural network to which the image is input, has 512 dimensions in the present embodiment; and thus when these are used as the dimensions (that is, spatial axes) of the readable feature space, as they are, 512 numerical values are obtained as the degree of contribution of the second feature value. However, as described above, the feature itself of each second feature value cannot be intuitively understood, and thus the explainability is not significantly enhanced by the degree of contribution.

Therefore, in the present embodiment, the dimension of the second feature value is reduced, and the degree of contribution is calculated by the above method. For example, the dimension of the second feature value is compressed into one dimension such that the degree of contribution after the compression can be regarded as the degree of contribution of the "image itself".

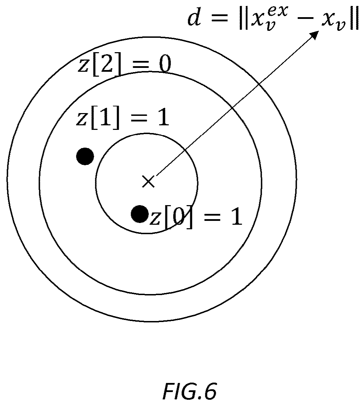

Fig. 6 is a distribution plot describing a method of compressing a dimension of a second feature value, in the feature space shown in Fig. 4, into one dimension. In Fig. 6, the target data is indicated by a cross mark, and the training data is indicated by a black circle.

The method shown in Fig. 6 compresses 512 dimensions before the compression into a feature value that is a distance from the target data in the 512-dimensional space. That is, the distance d is calculated as follows. Here, $x^{ev}_v$, and $x_v$ are respectively values of a v-dimension among 512 dimensions in the input image that is the target and the training input image.

[Math 3]

$$d = \left\| x^{ex}_v - x_v \right\|$$

Further, corresponding to the first feature value, the feature value after the compression is also assigned a readable feature value of 0 or 1. In the present embodiment, when the distance d is greater than or equal to a threshold value, the readable feature value z=0 is assigned. Conversely, when the distance d is smaller than the threshold value, the readable feature value z=1 is assigned.

In this manner, the dimension of the second feature value becomes one dimension, and is projected into a binary space as a readable feature value. In this manner, it can be said that the readable feature value of the so-called image itself, in which the second feature value is reflected, is defined.

A total of 14-dimensional readable feature space is set up, by the one-dimensional readable feature value of the image itself and the 13-dimensional readable feature value of the first feature value, and the linear regression of "Math 2" described above is performed. The degree of contribution that is obtained by the result thereof is the degree of contribution of the feature value corresponding to the 14 dimensions, and thus it is possible for the user to refer to both of the degree of contribution of the image itself and the degree of contribution of the first feature value, in comparable forms. The first feature value is obtained by quantifying the predetermined interpretable feature, and thus in the obtained result, not only interpretability is enhanced, but also the degree of contribution of the image itself is understood, which also makes it possible for the user to evaluate meaning of a heat map generated in the second processing described below.

Next, the second processing (step S124) will be described. In step S124 after the determination step of step S110, for example, the heat map is generated. The heat map is an output of the degree of contribution by which the contribution is made for each region of the image as the target, in a mutually comparable manner, when the learning model 120 obtains the result of the determination on the target. It should be noted that without being limited to the heat map, the method only needs to visualize (visualize the basis for the determination) a region contributing to the determination result in the image as the target. For example, from among the images as the target, the contributing region (region that serves as the basis) (all regions when there are a plurality of regions) may be extracted for each degree of contribution to the determination result. In the present embodiment, the second processing is performed by using only information of the CNN for image 132 in the learning model 120.

As a method of generating the heat map, there are various methods including: a CAM (Class Activation Map) that is a class activation mapping method for the learning model, and its derivative (that use a gradient for the weight) such as a Grad-CAM and a Grad CAM++; a ScoreCAM that performs weighting by forward propagation without using the gradient for the weight; and further GuideBP and Integrated Grad.

In a typical Grad-CAM, a gradient for an output from a final layer of a CNN is used to calculate an influence of each pixel value of the input image, on the predicted probability of each class; however, instead of this, a gradient of an output from an intermediate layer, an average of gradients for outputs from all of the respective layers, or the like may be used. In addition, without being limited to the heat map, perturbation may be applied to the input image for dividing into several superpixels, and then the LIME mentioned above may be applied to visualize a region which serves as the basis for the determination in the input image. In the present embodiment, any of these may be used.

After the first processing (step S122) and the second processing (step S124) mentioned above are completed, the explanation output unit 104 outputs, to a display or the like, the result of the first processing (the degree of contribution) and the result of the second processing (hereinafter referred to as a processing result). Instead of or in addition to outputting the processing result to the display, the explanation output unit 104 may store the processing result in the storage unit 106. In addition, the processing result may be output together with the result of the determination by the determination unit 102.

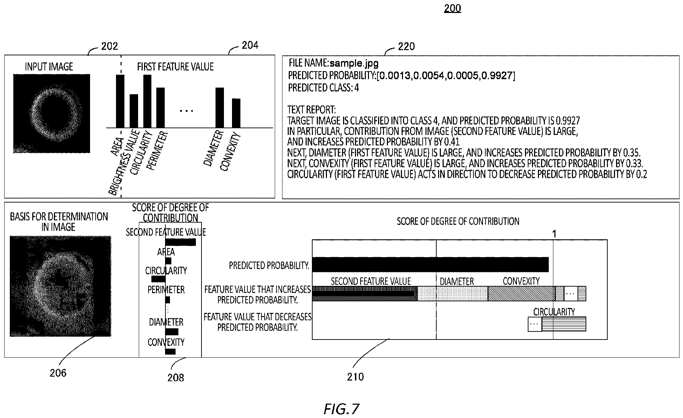

Fig. 7 shows an example of a display image 200 that is displayed on a display by the explanation output unit 104. In Fig. 7, the input image that is the input to the learning model 120 is displayed in a target image area 202. Similarly, for the first feature value that is the input to the learning model 120, names of 13 features and bar graphs showing their magnitudes are associated with each other, and are displayed in a first feature value area 204.

The degree of contribution calculated in step S122 (the first processing) is displayed in the display image 200 in a plurality of aspects. First, each degree-of-contribution area 208 displays a name of the feature and a bar graph indicating the magnitude of its degree of contribution in association with each other. For the first feature value, the same 13 features as those of the input are displayed. On the other hand, the second feature value is displayed as a single feature by corresponding to being compressed into one dimension. Further, these are vertically aligned and displayed. This makes it possible for the user to easily recognize the degree of contribution of the first feature value and the degree of contribution of the second feature value, which enhances the explainability of the determination. In addition, the degree of contribution of the second feature value is singular, and thus it can be interpreted as the degree of contribution of the "image itself," which further enhances the explainability.

In a cumulative degree-of-contribution area 210, respective bar graphs of the predicted probability, the feature value that increases the predicted probability, and the feature value that decreases the predicted probability, are vertically aligned and displayed in a mutually comparable manner. The bar graphs of the feature values that increase the predicted probability are aligned in series from a left end in descending order of a positive value of the degree of contribution. The bar graphs of the feature values that decrease the predicted probability are aligned in series from a left in descending order of a negative value of the degree of contribution. A right end of the bar graph is aligned with a right end of the bar graph immediately above. In addition, among the respective degrees of contribution, above the one that is longer than a predetermined length, the name of the feature is written. These displays further enhance the explainability.

Further, the degree of contribution is displayed by using text in a text area 220. In the text area 220, a file name of the target, the predicted probability, a predicted class, and a text report are displayed. As the text report, text corresponding to each of the degree of contribution of the second feature value, and the degree of contribution of the first feature value, may be displayed.

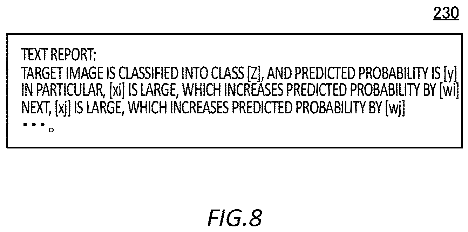

Fig. 8 is a template 230 of text that is displayed in the text area 220. The template 230 is stored in the storage unit 106.

The template 230 includes a sentence set in advance and a variable that is inserted into the sentence. The variable is indicated by a bracket [ ], and a value for a symbol that is written in the bracket is assigned by the determination unit 102 and the contribution output unit 104, and is displayed in the text area 220.

The number of features that are displayed in the text area 220 may be predetermined; and the ones that have values greater than a threshold value of the degree of contribution or a threshold value of an absolute value of the degree of contribution, may be displayed.
These rules may also be stored in the storage unit 106.

Further, the heat map generated in step S124 (the second processing) is displayed in a heat map area 206. These displays further enhance the explainability.

As described above, with the present embodiment, it is possible to ensure the accuracy of the determination, and to present the basis for the determination in an easily understandable manner. In particular, it is possible to enhance the explainability of a determination, in a determination in a so-called multimodal model in which the inputs of different types of feature values are used to perform the determination.

A modified example of the embodiment described above will be shown. The CNN for image 132 may be, instead of VGGNet, another CNN including AlexNet, VGGNet, ResNet, ResNeXt, or the like. Further, another neural network that is not the CNN may also be used. In addition, as the second feature value, 512 dimensions of the final layer of the CNN for image 132 are used; however, instead of or in addition to this, a feature value of an intermediate layer prior to the final layer may be used.

The reduction of the dimension of the second feature value is not limited to the reduction to one dimension by using the distance. As another example, the dimension of the second feature value may be reduced by using principal component analysis or a nonlinear dimensionality compression algorithm that is related thereto. As yet another example, the dimension may be reduced to one dimension by statistical processing such as taking a simple average of the second feature value or a maximum value thereof, or the like.

The explanation model is not limited to the linear regression.

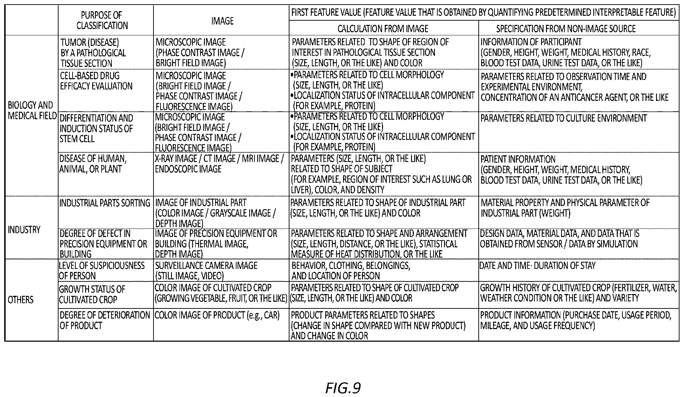

The above embodiment has described the example in which the learning model 120 is used to determine the cell cycle from the cell image. However, the use of the learning model 120 is not limited to this. Another example of applicable use is listed in Fig. 9 together with the input image and the first feature value.

The first feature value may be able to be calculated automatically or manually from the input image, or may not be able to be calculated from the input image. An example of the first feature value that is able to be calculated includes: a shape feature such as a radius and a length of the subject (an object and a living body) captured in the image; a color feature; a characteristic feature; and others. An example of the first feature value that is not able to be calculated includes information in relation to an attribute such as the gender, age, and race of a person of the object (subject) captured in the input image and a participant or the like of the captured living body (subject) (these are related to the subject and correspond to predetermined interpretable features); and for example, location information is quantified by coordinates or an index.

In addition, various embodiments of the present invention may be described with reference to flowcharts and block diagrams, wherein the block may serve as (1) a stage in a process in which an operation is performed, or (2) a section of an apparatus having a role of performing an operation. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include floppy (registered trademark) disks, diskettes, hard disks, random access memories (RAM), read-only memories (ROM), erasable programmable read-only memories (EPROM or flash memory), electrically erasable programmable read-only memories (EEPROM), static random access memories (SRAM), compact disk read-only memories (CD-ROM), digital versatile discs (DVD), Blu-ray (registered trademark) discs, memory sticks, integrated circuit cards, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

Computer-readable instructions may be provided to a processor of a general-purpose computer, a special purpose computer, or another programmable data processing apparatus, or to a programmable circuit, locally or via a local area network (LAN), wide area network (WAN) such as the Internet, or the like, so that the computer-readable instructions are executed to create means for performing operations specified in the flowcharts or block diagrams. Examples of the processor include a computer processor, a processing unit, a microprocessor, a digital signal processor, a controller, a microcontroller, and the like.

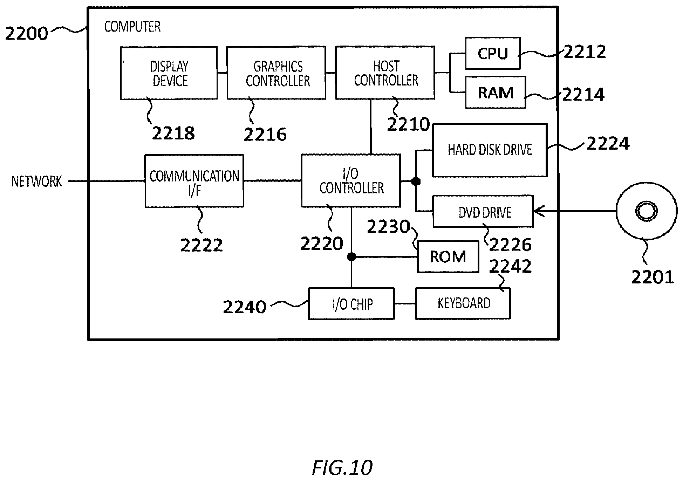

Fig. 10 shows an example of a computer 2200 in which a plurality of aspects of the present invention may be embodied in whole or in part. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a stage of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from a DVD-ROM 2201 and provides the programs or the data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

The program is provided by a computer-readable medium such as the DVD-ROM 2201 or the IC card. The program is read from a computer-readable medium, installed in the hard disk drive 2224, the RAM 2214, or the ROM 2230 which are also examples of the computer-readable medium, and executed by the CPU 2212. The information processing written in these programs is read by the computer 2200 and provides cooperation between the programs and the above-described various types of hardware resources. The apparatus or method may be constituted by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on processing written in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, are stored in the recording medium, the CPU 2212 may retrieve, out of the plurality of entries, an entry with the attribute value of the first attribute specified that meets a condition, read the attribute value of the second attribute stored in the entry, and thereby acquiring the attribute value of the second attribute associated with the first attribute meeting a predetermined condition.

The programs or software modules described above may be stored in a computer-readable medium on the computer 2200 or near the computer 2200. In addition, a recording medium such as a hard disk or an RAM provided in a server system connected to a dedicated communication network or the Internet can be used as a computer-readable medium, thereby providing a program to the computer 2200 via the network.

While the present invention has been described above by way of the embodiments, the technical scope of the present invention is not limited to the scope described in the above-described embodiments. It is apparent to persons skilled in the art that various alterations or improvements can be made to the above-described embodiments. It is also apparent from the description of the claims that the embodiments to which such alterations or improvements are made can fall within the technical scope of the present invention.

Each process of the operations, procedures, steps, stages, and the like performed by a device, system, program, and method shown in the claims, the specification, and the drawings can be performed in any order as long as the order is not indicated by "prior to," "before," and the like and as long as the output from a previous process is not used in a later process. Even if the operational flow is described using phrases such as "first" or "next" for convenience in the claims, the specification, and the drawings, it does not necessarily mean that the process must be performed in this order.

EXPLANATION OF REFERENCES

10: learning apparatus; 20: image; 100: feature calculation unit; 102: determination unit; 104: explanation output unit; 106: storage unit; 120: learning model; 132: CNN for image; 134: NN for feature value; 136: NN for classification; 200: display image; 202: target image area; 204: first feature value area; 206: heat map area; 208: each degree-of-contribution area; 210: cumulative degree-of-contribution area; 220: text area; 230: template; 2200: computer; 2201: DVD-ROM; 2210: host controller; 2212: CPU; 2214: RAM; 2216: graphics controller; 2218: display device; 2220: input/output controller; 2222: communication interface; 2224: hard disk drive; 2226: DVD-ROM drive; 2230: ROM; 2240: input/output chip; 2242: keyboard.

**Claims**

1. A learning apparatus comprising:

   a storage unit which stores a learning model that is trained by setting, as an input, a training image set and a training feature value set that is related to a subject of the training image set and that is obtained by quantifying a predetermined interpretable feature, and by setting, as an output, results of a determination on the training image set and the training feature value set;
   a determination unit which outputs, by using the learning model stored in the storage unit, results of a determination on an target image and a first feature value that is related to a subject of the target image and that is obtained by quantifying the predetermined interpretable feature; and
   an explanation output unit which outputs a degree of contribution of the target image and a degree of contribution of the first feature value, for the result of the determination on the target image and the first feature value by the learning model.

2. The learning apparatus according to claim 1, wherein the predetermined interpretable feature includes a parameter for quantitatively representing a shape or a characteristic of the subject.

3. The learning apparatus according to claim 1 or 2, wherein

   the determination unit extracts a second feature value from the target image, by using the learning model, and
   the explanation output unit calculates each degree of contribution, by performing linear regression on a neighborhood of data consisting of the first feature value and the second feature value related to the target image, in a feature space including the second feature value and the first feature value.

4. The learning apparatus according to any one of claims 1 to 3, wherein

   the determination unit extracts a second feature value from the target image, by using the learning model, and
   the explanation output unit compresses a dimension of a feature value vector that is the second feature value, and calculates a degree of contribution of the second feature value as the degree of contribution of the target image.

5. The learning apparatus according to claim 4, wherein the explanation output unit compresses the feature value vector into one dimension.

6. The learning apparatus according to any one of claims 1 to 5, further comprising a feature calculation unit which calculates at least one of first feature values, each of which is the first feature value, for inputting to the learning model, based on the target image.

7. The learning apparatus according to any one of claims 1 to 6, wherein the learning model includes a convolutional neural network.

8. The learning apparatus according to any one of claims 1 to 7, wherein the explanation output unit further outputs an image showing a basis for the determination in the target image, for the result of the determination by the learning model.

9. The learning apparatus according to any one of claims 1 to 8, wherein the explanation output unit causes the degree of contribution of the target image and the degree of contribution of the first feature value, to be aligned and displayed.

10. The learning apparatus according to claim 8, wherein the explanation output unit causes the degree of contribution of the target image, the degree of contribution of the first feature value, the image showing the basis for the determination, and the result of the determination, to be aligned and displayed.

11. The learning apparatus according to claim 9 or 10, wherein
the explanation output unit causes text which corresponds to each of the degree of contribution of the target image and the degree of contribution of the first feature value, to be displayed.

12. A program which causes a computer to implement:

a storing function of storing, in a storage unit, a learning model that is trained by setting, as an input, a training image set and a training feature value set that is related to a subject of the training image set and that is obtained by quantifying a predetermined interpretable feature, and by setting, as an output, results of a determination on the training image set and the training feature value set;
a determining function of outputting, by using the learning model stored in the storage unit, results of a determination on an target image and a first feature value that is related to a subject of the target image and that is obtained by quantifying the predetermined interpretable feature; and
an explanation outputting function of outputting a degree of contribution of the target image and a degree of contribution of the first feature value, for the result of the determination on the target image and the first feature value by the learning model.

13. A learning apparatus which uses a learning model that is trained by setting, as an input, a training image set and a training feature value set that is related to a subject of the training image set and that is obtained by quantifying a predetermined interpretable feature, and by setting, as an output, results of a determination on the training image set and the training feature value set, and which outputs results of a determination on an target image and a first feature value that is related to a subject of the target image and that is obtained by quantifying the predetermined interpretable feature, the learning apparatus comprising:
an explanation output unit which outputs a degree of contribution of the target image and a degree of contribution of the first feature value, for the result of the determination on the target image and the first feature value by the learning model.

_FIG.1_

FIG.2

*FIG.3*

FIG.4

DENSITY OF DATA

Lv.[0]=0    Lv.[0]=1    Lv.[0]=2    Lv.[0]=3

Lv.[1]=3    ●    $x[1] = [1,3]$        ●    $x[1] = [3,3]$
                 $z = [1,0]$                $z = [0,0]$

Lv.[1]=2    $x[1] = [1,1]$
            $z = [1,1]$

                                                              $x_1$
                 ●

DENSITY OF DATA

Lv.[1]=1    ×
            $x_{ex} = [1,1]$
            $z_{ex} = [1,1]$

                                     $x[1] = [3,1]$
                                ●    $z = [0,1]$

Lv.[1]=0                    ●
                                $x[1] = [2,0]$
            $x_0$            $z = [0,0]$

FIG.5

FIG.6

200

### 202 — INPUT IMAGE

### 204 — FIRST FEATURE VALUE

AREA, BRIGHTNESS VALUE, CIRCULARITY, PERIMETER ... DIAMETER, CONVEXITY

### 220

FILE NAME:**sample.jpg**
PREDICTED PROBABILITY:[**0.0013,0.0054,0.0005,0.9927**]
PREDICTED CLASS: 4

TEXT REPORT:
TARGET IMAGE IS CLASSIFIED INTO CLASS 4, AND PREDICTED PROBABILITY IS 0.9927
IN PARTICULAR, CONTRIBUTION FROM IMAGE (SECOND FEATURE VALUE) IS LARGE,
AND INCREASES PREDICTED PROBABILITY BY 0.41
NEXT, DIAMETER (FIRST FEATURE VALUE) IS LARGE, AND INCREASES PREDICTED PROBABILITY BY 0.35.
NEXT, CONVEXITY (FIRST FEATURE VALUE) IS LARGE, AND INCREASES PREDICTED PROBABILITY BY 0.33.
CIRCULARITY (FIRST FEATURE VALUE) ACTS IN DIRECTION TO DECREASE PREDICTED PROBABILITY BY 0.2

BASIS FOR DETERMINATION IN IMAGE

SCORE OF DEGREE OF CONTRIBUTION
SECOND FEATURE VALUE
AREA
CIRCULARITY
PERIMETER
DIAMETER
CONVEXITY

SCORE OF DEGREE OF CONTRIBUTION
1

PREDICTED PROBABILITY.

FEATURE VALUE THAT INCREASES PREDICTED PROBABILITY.

FEATURE VALUE THAT DECREASES PREDICTED PROBABILITY.

SECOND FEATURE VALUE | DIAMETER | CONVEXITY
CIRCULARITY

206          208                    210

*FIG.7*

<u>230</u>

TEXT REPORT:
TARGET IMAGE IS CLASSIFIED INTO CLASS [Z], AND PREDICTED PROBABILITY IS [y]
IN PARTICULAR, [xi] IS LARGE, WHICH INCREASES PREDICTED PROBABILITY BY [wi]
NEXT, [xj] IS LARGE, WHICH INCREASES PREDICTED PROBABILITY BY [wj]
・・・。

*FIG.8*

| | PURPOSE OF CLASSIFICATION | IMAGE | FIRST FEATURE VALUE (FEATURE VALUE THAT IS OBTAINED BY QUANTIFYING PREDETERMINED INTERPRETABLE FEATURE) | |
| --- | --- | --- | --- | --- |
| | | | CALCULATION FROM IMAGE | SPECIFICATION FROM NON-IMAGE SOURCE |
| BIOLOGY AND MEDICAL FIELD | TUMOR (DISEASE) BY A PATHOLOGICAL TISSUE SECTION | MICROSCOPIC IMAGE (PHASE CONTRAST IMAGE / BRIGHT FIELD IMAGE) | PARAMETERS RELATED TO SHAPE OF REGION OF INTEREST IN PATHOLOGICAL TISSUE SECTION (SIZE, LENGTH, OR THE LIKE) AND COLOR | INFORMATION OF PARTICIPANT (GENDER, HEIGHT, WEIGHT, MEDICAL HISTORY, RACE, BLOOD TEST DATA, URINE TEST DATA, OR THE LIKE) |
| | CELL-BASED DRUG EFFICACY EVALUATION | MICROSCOPIC IMAGE (BRIGHT FIELD IMAGE / PHASE CONTRAST IMAGE / FLUORESCENCE IMAGE) | •PARAMETERS RELATED TO CELL MORPHOLOGY (SIZE, LENGTH, OR THE LIKE) •LOCALIZATION STATUS OF INTRACELLULAR COMPONENT (FOR EXAMPLE, PROTEIN) | PARAMETERS RELATED TO OBSERVATION TIME AND EXPERIMENTAL ENVIRONMENT, CONCENTRATION OF AN ANTICANCER AGENT, OR THE LIKE |
| | DIFFERENTIATION AND INDUCTION STATUS OF STEM CELL | MICROSCOPIC IMAGE (BRIGHT FIELD IMAGE / PHASE CONTRAST IMAGE / FLUORESCENCE IMAGE) | •PARAMETERS RELATED TO CELL MORPHOLOGY (SIZE, LENGTH, OR THE LIKE) •LOCALIZATION STATUS OF INTRACELLULAR COMPONENT (FOR EXAMPLE, PROTEIN) | PARAMETERS RELATED TO CULTURE ENVIRONMENT |
| | DISEASE OF HUMAN, ANIMAL, OR PLANT | X-RAY IMAGE / CT IMAGE / MRI IMAGE / ENDOSCOPIC IMAGE | PARAMETERS (SIZE, LENGTH, OR THE LIKE) RELATED TO SHAPE OF SUBJECT (FOR EXAMPLE, REGION OF INTEREST SUCH AS LUNG OR LIVER), COLOR, AND DENSITY | PATIENT INFORMATION (GENDER, HEIGHT, WEIGHT, MEDICAL HISTORY, BLOOD TEST DATA, URINE TEST DATA, OR THE LIKE) |
| INDUSTRY | INDUSTRIAL PARTS SORTING | IMAGE OF INDUSTRIAL PART (COLOR IMAGE / GRAYSCALE IMAGE / DEPTH IMAGE) | PARAMETERS RELATED TO SHAPE OF INDUSTRIAL PART (SIZE, LENGTH, OR THE LIKE) AND COLOR | MATERIAL PROPERTY AND PHYSICAL PARAMETER OF INDUSTRIAL PART (WEIGHT) |
| | DEGREE OF DEFECT IN PRECISION EQUIPMENT OR BUILDING | IMAGE OF PRECISION EQUIPMENT OR BUILDING (THERMAL IMAGE, DEPTH IMAGE) | PARAMETERS RELATED TO SHAPE AND ARRANGEMENT (SIZE, LENGTH, DISTANCE, OR THE LIKE), STATISTICAL MEASURE OF HEAT DISTRIBUTION, OR THE LIKE | DESIGN DATA, MATERIAL DATA, AND DATA THAT IS OBTAINED FROM SENSOR / DATA BY SIMULATION |
| OTHERS | LEVEL OF SUSPICIOUSNESS OF PERSON | SURVEILLANCE CAMERA IMAGE (STILL IMAGE, VIDEO) | BEHAVIOR, CLOTHING, BELONGINGS, AND LOCATION OF PERSON | DATE AND TIME· DURATION OF STAY |
| | GROWTH STATUS OF CULTIVATED CROP | COLOR IMAGE OF CULTIVATED CROP (GROWING VEGETABLE, FRUIT, OR THE LIKE) | PARAMETERS RELATED TO SHAPE OF CULTIVATED CROP (SIZE, LENGTH, OR THE LIKE) AND COLOR | GROWTH HISTORY OF CULTIVATED CROP (FERTILIZER, WATER, WEATHER CONDITION OR THE LIKE) AND VARIETY |
| | DEGREE OF DETERIORATION OF PRODUCT | COLOR IMAGE OF PRODUCT (e.g., CAR) | PRODUCT PARAMETERS RELATED TO SHAPES (CHANGE IN SHAPE COMPARED WITH NEW PRODUCT) AND CHANGE IN COLOR | PRODUCT INFORMATION (PURCHASE DATE, USAGE PERIOD, MILEAGE, AND USAGE FREQUENCY) |

FIG.9

*FIG.10*

## INTERNATIONAL SEARCH REPORT

| | International application No. |
|---|---|
| | **PCT/JP2024/017720** |

**A.    CLASSIFICATION OF SUBJECT MATTER**

*G06T 7/00*(2017.01)i

FI:    G06T7/00 350B

According to International Patent Classification (IPC) or to both national classification and IPC

**B.    FIELDS SEARCHED**

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-125240 A (HITACHI, LTD.) 25 July 2019 (2019-07-25) paragraphs [0024], [0029], [0034]-[0046], [0052]-[0054], [0093], [0128], [0149], fig. 1-7, 10, 13 | 1-3, 7, 9, 11-13 |
| Y | | 8, 10 |
| A | | 4-6 |
| Y | WO 2022/009652 A1 (SONY GROUP CORPORATION) 13 January 2022 (2022-01-13) paragraphs [0066]-[0067], [0070]-[0071], [0077] | 8, 10 |

☐ Further documents are listed in the continuation of Box C.            ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 July 2024** | **30 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/017720**

| Patent document cited in search report | | | Publication date (day/month/year) | Patent family member(s) | | | Publication date (day/month/year) |
|---|---|---|---|---|---|---|---|
| JP | 2019-125240 | A | 25 July 2019 | US | 2019/0221311 | A1 | |
| | | | | paragraphs [0035], [0041], [0046]-[0059], [0065]-[0067], [0100], [0139], [0160], fig. 1-7, 10, 13 | | | |
| WO | 2022/009652 | A1 | 13 January 2022 | US | 2023/0237774 | A1 | |
| | | | | paragraphs [0095]-[0096], [0099]-[0100], [0106] | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022176396 A

**Non-patent literature cited in the description**

- **NILS GESSERT et al.** Skin lesion classification using ensembles of multi-resolution EfficientNets with meta data. *Methods X*, 2020, vol. 7